# EUROPÄISCHE PATENTANMELDUNG

(11) **EP 3 232 055 A1**
(43) Veröffentlichungstag der Anmeldung: **18.10.2017**
(21) Anmeldenummer: 17166015.2
(22) Anmeldetag: 11.04.2017
(51) Int. Cl.: F03D 80/70, F03D 15/00

(54) **WINDENERGIEANLAGE MIT EINEM TRIEBSTRANG**

(30) Priorität: 13.04.2016 DE 102016004343
(71) Anmelder: Senvion GmbH, 22297 Hamburg (DE)
(72) Erfinder: Trede, Alf, 25885 Immenstedt (DE)
(74) Vertreter: Glawe, Delfs, Moll

(57) **Zusammenfassung**

Die Erfindung betrifft eine Windenergieanlage mit einem Triebstrang (1) umfassend eine Rotorwelle (2) und ein Planetengetriebe (10). Die Rotorwelle (2) ist dabei fest und spielfrei mit dem Planetenträger (14) der ersten Getriebestufe (11) verbunden. Weiterhin ist die Rotorwelle (2) auf der von der ersten Getriebestufe (11) abgewandten Seite (3) mit einem Wälzlager (5) an einer Tragstruktur (30) gelagert. Der mit der Rotorwelle (2) verbundene Planetenträger (14) ist mit einem zweireihigen Wälzlager (20) mit Schrägstellung in X-Anordnung als Festlager in einem Getriebegehäuse (16) gelagert, wobei das Getriebegehäuse (16) an wenigstens einem gegenüber der Tragstruktur (30) ortsfesten Auflager (31) befestigt ist.

## Beschreibung

Die Erfindung betrifft eine Windenergieanlage mit einem Triebstrang umfassend eine Rotorwelle und ein Planetengetriebe.

Bei bekannten Windenergieanlagen lässt sich ein um eine im Wesentlichen horizontale Achse drehbarer Rotor durch Wind in Rotation versetzen. Der Rotor ist dabei fest mit einer Rotorwelle und über ein Getriebe mit einem Generator zur Umwandlung der Rotationsenergie des Rotors in elektrische Energie verbunden.

Zur drehbaren Lagerung des Rotors ist bekannt, den Triebstrang der Windenergieanlage mit einer Drei-Punkt-Lagerung zu lagern. Die Rotorwelle wird dabei durch ein nahe dem Verbindungsbereich zum Rotor angeordnetes vorderes Lager gelagert und im hinteren Bereich an das Getriebe angebunden, welches an zwei seitlichen Getriebeauflagern an dem Maschinenträger der Windenergieanlage befestigt ist. Die Rotorwelle wird bei einer solchen Drei-Punkt-Lagerung insbesondere im Hinblick auf Biegebelastungen über die Lager des Getriebes gestützt.

In dem Dokument DE 10 2006 027 543 A1 sind verschiedene Varianten der Drei-Punkt-Lagerung des Rotors einer Windenergieanlage beschrieben. Diesen Varianten ist gemein, dass das vordere Lager für die Rotorwelle als Festlager, welches auch axiale Kräfte aufnehmen kann, ausgestaltet ist, und dass zwischen der Rotorwelle und der ersten Getriebestufe Kupplungen vorgesehen sein müssen, um bspw. aufgrund der auf den Rotor wirkenden Windkräfte entstehende Verformungen der Rotorwelle vom Getriebe fernzuhalten, damit dieses nicht beschädigt wird. Dazu kann gemäß DE 10 2006 027 543 A1 eine Torsionsscheibe vorgesehen sein, die über eine Zahnkupplung mit der ersten Getriebestufe zusammenwirkt, um axiale oder Biegeverformungen auszugleichen. Durch eine lösbare Welle-Naben-Verbindung wird alternativ zumindest die Übertragung von Axialkräften auf das Getriebe vermieden. Entsprechende Verbindungen sind allerdings nachteilig, da sie aufgrund der zu übertragenden Drehmomente regelmäßig aufwendig in der Herstellung sind.

Der Erfindung liegt die Aufgabe zugrunde, eine Windenergieanlage zu schaffen, bei der die aus dem Stand der Technik bekannten Nachteile nicht mehr oder nur noch in vermindertem Umfang auftreten.

Gelöst wird diese Aufgabe durch eine Windenergieanlage gemäß dem Hauptanspruch. Vorteilhafte Weiterbildungen sind Gegenstand der abhängigen Ansprüche.

Demnach betrifft die Erfindung eine Windenergieanlage mit einem Triebstrang umfassend eine Rotorwelle und ein Planetengetriebe mit einer ersten Getriebestufe, wobei die Rotorwelle mit dem Planetenträger der ersten Getriebestufe fest und spielfrei verbunden ist, die Rotorwelle auf der von der ersten Getriebestufe abgewandten Seite mit einem Wälzlager an einer Tragstruktur gelagert ist und der mit der Rotorwelle verbundene Planetenträger mit einem zweireihigen Wälzlager mit Schrägstellung in X-Anordnung in einem Getriebegehäuse des Planetengetriebe gelagert ist, wobei das Getriebegehäuse an wenigstens einem gegenüber der Tragstruktur ortsfesten Auflager befestigt ist.

Zunächst werden einige in Zusammenhang mit der Erfindung verwendete Begriffe erläutert.

Bei einem Planetengetriebe handelt es sich um ein Umlaufrädergetriebe, welches in jeder Getriebestufe als Getriebekomponenten ein innenverzahntes Hohlrad, ein außenverzahntes Zentralrad und einen Planetenträger mit wenigstens einem daran angeordneten Umlaufrad, das sowohl in die Verzahnung des Hohlrads als auch in die Verzahnung des Zentralrads eingreift, umfasst. In der Regel wird eine der Getriebekomponenten einer Getriebestufe eines Planetengetriebes - häufig das Hohlrad - festgehalten, während die beiden anderen Getriebekomponenten um eine gemeinsame Achse mit einem durch die Dimensionierung der einzelnen Räder des Getriebes vorgegebenen Übersetzungsverhältnis drehbar sind. Ein Planetengetriebe kann mehrere Getriebestufen aufweisen. Es ist aber auch möglich, dass ein Planetengetriebe nur eine Getriebestufe umfasst, wobei dann die erste Getriebestufe gleichzeitig die einzige Getriebestufe ist.

Ein Wälzlager ist ein Loslager, wenn es keine axialen Kräfte aufnehmen kann. Ein Wälzlager ist hingegen ein Festlager, wenn es axiale Kräfte in beide Richtungen aufnehmen kann. Werden sowohl ein Festlager als auch ein Loslager zur Lagerung bspw. einer Welle verwendet, spricht man von einer Fest-Los-Lagerung (FLL).

Bei der erfindungsgemäßen Windenergieanlage wird durch die Lagerung des Planetenträgers der ersten Getriebestufe im Getriebegehäuse mit einem zweireihigen Wälzlager mit Schrägstellung in X-Anordnung sichergestellt, dass sich die Lage der Rotationsachse des Planetenträgers gegenüber dem Getriebegehäuse auch unter Belastung praktisch nicht verändert. Aufgrund der Schrägstellung in X-Anordnung beim zweireihigen Wälzlager lässt sich nämlich eine genaue axiale Führung zwischen Getriebegehäuse und Planetenträger erreichen, d.h. diese lassen sich bei geeigneter Ausführung des Lagers in axialer Richtung praktisch nicht mehr relativ zueinander bewegen. Auch können Kippmomente vom Lager aufgenommen werden.

Indem eine feste Lage der Rotationsachse des Planetenträgers gegenüber dem Getriebegehäuse durch das zweireihigen Wälzlager mit Schrägstellung in X-Anordnung sichergestellt ist, gilt entsprechendes auch für weitere am Getriebegehäuse befestigten oder gelagerten Komponenten der ersten Getriebestufe, insbesondere dem innenverzahnten Hohlrad und dem außenverzahntes Zentralrad. Das Hohlrad kann dabei bspw. fest mit dem Gehäuse verbunden sein, während das außenverzahnte Zentralrad durch geeignete Lager drehbar gegenüber dem Getriebegehäuse gelagert ist.

Erst durch diese vorbeschriebene Lagerausgestaltung und -anordnung ist es sicher möglich, die Rotorwelle fest und spielfrei mit dem Planetenträger der ersten Getriebestufe zu verbinden. In anderen Worten ist die fragliche Verbindung also derart ausgestaltet, dass zwischen Rotorwelle und Getriebekomponente bei üblicher Belastung der Verbindung praktisch keine Relativbewegung auftritt. Verformungen der Rotorwelle aufgrund von Belastungen durch den auf den Rotor wirkenden Wind (insb. Biegebelastungen) können in der Folge zwar zu einer Veränderung der Lage der Achse des Planetenträgers der ersten Getriebestufe führen, aufgrund des zweireihigen Wälzlager mit Schrägstellung in X-Anordnung verändert sich jedoch auch die Lage des Getriebegehäuses entsprechend, sodass diese Lageveränderung auf die relative Lage der im Getriebegehäuse angeordneten Getriebekomponenten und deren Zusammenwirken keinen Einfluss hat. Auf eine Kupplung, wie sie im Stand der Technik vorgesehen ist, um Verformungen der Rotorwelle vom Getriebe fernzuhalten, kann bei der vorliegenden Erfindung demnach vollständig verzichtet werden.

Es ist bekannt, dass bei einem zweireihigen Wälzlager mit Schrägstellung in X-Anordnung die Momentaufnahmefähigkeit gegenüber einem vergleichbaren Lager mit O-Anordnung geringer ist. Aufgrund des regelmäßig großen Durchmessers eines Lagers an der fraglichen Stelle eines Triebstrangs einer Windenergieanlage sind die diesbezüglichen Nachteile einer X-Anordnung jedoch grundsätzlich überschaubar. Es kann aber auch vorgesehen sein, dass Planetenträger der ersten Getriebestufe auf der von der Rotorwelle abgewandten Seite des zweireihigen Wälzlagers mit einem als Loslager ausgestalteten Stützlager im Getriebegehäuse gelagert sind. Durch eine solche zusätzliche Lagerung wird Fest-Los-Lagerung des Planetenträgers im Getriebegehäuse erreicht. Dadurch wird die Sicherheit, dass sich die Lage der Rotationsachse des Planetenträgers gegenüber dem Getriebegehäuse auch unter Belastung nicht verändert, weiter erhöht.

Der Triebstrang umfassend die Rotorwelle und das Planetengetriebe ist grundsätzlich an zwei Punkten gelagert: zum einen durch das an der Rotorwelle angeordnete Wälzlager an der Tragstruktur, zum anderen durch die Befestigung des Getriebegehäuses des Planetengetriebes an dem wenigstens einen gegenüber der Tragstruktur ortsfesten Auflager, wobei die letztendliche Drehbarkeit über das zweireihige Wälzlager mit Schrägstellung in X-Anordnung im Getriebegehäuse erreicht wird. Das wenigstens eine Auflager kann auch unmittelbar an der Tragstruktur selbst angeordnet sein.

Um eine spannungsfreie Lagerung des Triebstrangs zu gewährleisten kann das an der Rotorwelle auf der von der ersten Getriebestufe abgewandten Seite angeordnete Wälzlager als Festlager ausgebildet sein. In diesem Fall muss dann die Befestigung des Planetengetriebes bzw. dessen Gehäuses wenigstens in axialer Richtung Bewegungen zulassend ausgestaltet sein. Alternativ dazu ist es möglich, das Getriebegehäuse gegenüber dem wenigstens einen Auflager - und somit auch gegenüber der Tragstruktur - in axialer Richtung im Wesentlichen unbeweglich zu befestigen. Ist das Getriebegehäuse entsprechend befestigt, liegt aufgrund der Eigenschaften des erfindungsgemäß vorgesehenen zweireihigen Wälzlagers mit Schrägstellung in X-Anordnung ein Festlager für den Triebstrang vor. In diesem Fall ist das an der Rotorwelle auf der von der ersten Getriebestufe abgewandten Seite angeordnete Wälzlager als Loslager auszubilden.

Der Außenring des zweireihigen Wälzlagers ist vorzugsweise geteilt. Der Außenring besteht in diesem Fall also aus zwei Ringen, die konzentrisch angeordnet den Außenring bilden. Die Trennfuge zwischen den beiden Ringen ist dabei vorzugsweise so ausgestaltet, dass sich durch Verringerung der Fugenbreite, vorzugsweise auf null, oder eine entsprechende Verspannung der beiden Teile des Außenrings eine Lagervorspannung erreichen lässt, durch die dann u.a. eine relative axiale Bewegung des Innen- und Außenrings verhindert werden kann.

Es ist bevorzugt, wenn die beiden Teile des Außenrings durch die Befestigung des Außenrings an einem Befestigungselement zur Befestigung des Getriebegehäuses an dem wenigstens einen Auflager miteinander verspannt werden. Dazu kann der eine Teil des Außenrings gewindefreie Durchgangsbohrungen und der andere Teil des Außenrings Bohrungen mit Innengewinde aufweisen. Wird der Außenring mit wenigstens einem Bolzen an einem Befestigungselement befestigt, ragen diese Bolzen jeweils durch das Befestigungselement und eine der gewindefreien Durchgangsbohrungen des ersten Teils des Außenrings, um jeweils in ein Innengewinde am anderen Teil des Außenrings einzugreifen. Werden die Bolzen nunmehr angezogen, wird neben der Befestigung des Außenrings an dem Befestigungselement noch die gewünschte Verspannung der beiden Teile des Außenrings erreicht.

Es ist auch möglich, weitere Elemente mit Durchgangsbohrung durch die Bolzen zur Befestigung des Außenrings bzw. der Verspannung der Teile des Außenrings zu sichern. So kann bspw. eine Drehmomentstütze für eine feststehende Getriebekomponente der ersten Getriebestufe durch wenigstens einen dieser Bolzen an dem Befestigungselement befestigt werden. Auch kann das Gehäuse des Getriebes so unmittelbar an dem Befestigungselement und/oder dem Außenring befestigt werden.

Der Innenring des zweireihigen Wälzlagers kann durch eine Schrumpfscheibe an dem Planetenträger der ersten Getriebestufe gesichert werden. Es ist aber bevorzugt, wenn der Innenring durch die Befestigung der Rotorwelle an dem Planetenträger fest eingespannt wird. Beispielsweise ist dies möglich in dem Fall, in dem die feste und spielfreie Verbindung von Rotorwelle und Planetenträger durch eine Verschraubung hergestellt wird. Beim Anziehen der Verschraubung entsteht in der Regel eine Relativbewegung der Rotorwelle zum Planetenträger, die genutzt werden kann, um den Innenring des zweireihigen Wälzlagers einzuspannen. Insbesondere wenn der Innenring des zweireihigen Wälzlagers eingespannt ist, ist sichergestellt, dass das zweireihige Wälzlager auch Axialkräfte aufnehmen kann.

Zur Befestigung des Getriebegehäuses an dem wenigsten einen Auflager kann ein Befestigungselement vorgesehen sein, welches bevorzugt einen elastischen Ausgleichsbereich umfasst. Durch einen entsprechenden elastischen Ausgleichsbereichs kann das Getriebegehäuse von derjenigen Struktur, an der sie selbst befestigt ist derart entkoppelt werden, dass kleinere Relativbewegungen zwischen Getriebegehäuse und dem wenigstens einen Auflager möglich sind. Dadurch kann insbesondere die Übertragung von Vibrationen vom Getriebe an die übrige Struktur der Windenergieanlage reduziert werden. Der elastische Ausgleichsbereich kann unmittelbar in das Befestigungselement integriert sein. Es ist aber auch möglich den elastischen Ausgleichsbereich durch elastische Aufhängungsbuchsen zu verwirklichen.

Es kann bevorzugt sein, wenn die Elastizität des elastischen Ausgleichsbereichs richtungsabhängig derart ausgestaltet ist, dass in einer Richtung parallel zur axialer Richtung der Rotorwelle eine höhere Steifigkeit erreicht wird als in eine Richtung parallel zur radialen Richtung der Rotorwelle. Dies ist insbesondere vorteilhaft, wenn das Getriebegehäuse gegenüber dem wenigstens einen Auflager in axialer Richtung im Wesentlichen unbeweglich gegenüber dem Auflager befestigt sein soll, um so ein Festlager für den Triebstrang zu bilden.
Es ist bevorzugt, wenn das zweireihige Wälzlager ein zweireihiges Kegelrollenlager ist. Vorzugsweise sind das Wälzlager an der von der ersten Getriebestufe abgewandten Seite der Rotorwelle und/oder das Stützlager Zylinderrollenlager.

Der Innendurchmesser des zweireihigen Wälzlagers beträgt vorzugsweise wenigstens 1.000 mm, weiter vorzugsweise wenigstens 1.100 mm, weiter vorzugsweit wenigstens 1.900 mm.

Die Erfindung wird nun unter Bezugnahme auf die beigefügte Zeichnung anhand einer bevorzugten Ausführungsform beispielhaft beschrieben. Es zeigt:

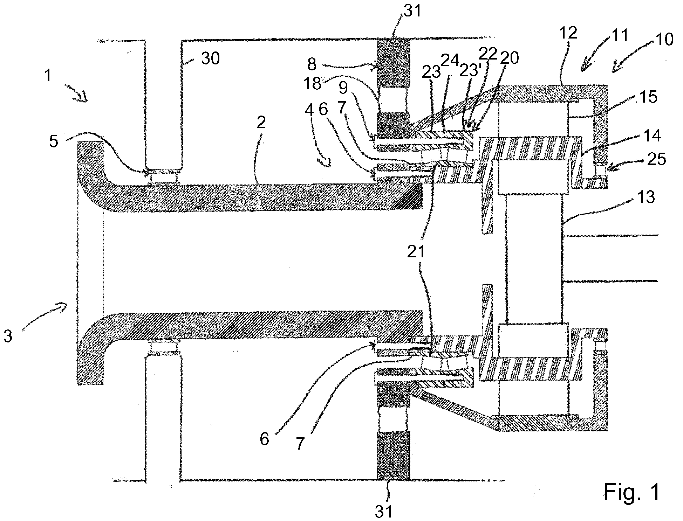

Figur 1: eine schematische Teildarstellung des Triebstrangs eines ersten Ausführungsbeispiels einer erfindungsgemäßen Windenergieanlage.

In Figur 1 ist der Triebstrang 1 einer erfindungsgemäßen Windenergieanlage schematisch mit den für die Erfindung relevanten Teilen dargestellt.

Der Triebstrang 1 umfasst eine Rotorwelle 2, an deren einem Ende 3 der Rotor der Windenergieanlage befestigt werden kann. Am anderen Ende 4 der Rotorwelle ist ein Planetengetriebe 10 angeordnet. Von diesem Getriebe 10 ist lediglich die erste Getriebestufe 11 dargestellt.

Die erste Getriebestufe 11 umfasst ein innenverzahntes Hohlrad 12, ein außenverzahntes Zentralrad 13 und einen Planetenträger 14 mit daran angeordneten Umlaufrädern 15, die sowohl in die Verzahnung des Hohlrads 12 als auch in die Verzahnung des Zentralrads 13 eingreifen, als Getriebekomponenten. Das Hohlrad 12 ist fest mit dem Getriebegehäuse 16 verbunden, während das Zentralrad 13 durch aus Gründen der Übersichtlichkeit nicht dargestellte Wälzlager drehbar gegenüber dem Getriebegehäuse 16 gelagert ist. Auf die Lagerung des Planetenträgers 14 im Getriebegehäuse 16 durch das zweireihige Wälzlager 20 und das Stützlager 25 wird nachfolgend noch näher eingegangen.

Die Rotorwelle 2 ist im Bereich des zur Verbindung mit dem Rotor vorgesehenen Endes 3 durch ein Wälzlager 5 an der - in Figur 1 nur angedeuteten - Tragstruktur 30 gelagert. An ihrem anderen Ende 4 ist die Rotorwelle 2 durch die Verschraubung 6 fest und spielfrei mit dem Planetenträger 14 der ersten Getriebestufe 11 verbunden. Dazu weist die Rotorwelle 2 Durchgangsöffnungen für Bolzen auf, die in Sackbohrungen mit Innengewinde am Planetenträger 14 eingreifen.

Durch die Verschraubung 6 und die Distanzbuchse 7 wird weiterhin der Innenring 21 des Wälzlagers 20 durch Einspannung fest an dem Planetenträger 14 der ersten Getriebestufe 11 gesichert. Das Wälzlager 20 ist als zweireihiges Kegelrollenlager mit einer Schrägstellung in X-Anordnung ausgestaltet. Der Außenring 22 des zweireihigen Wälzlagers 20 ist in zwei Ringe 23, 23' geteilt. Der eine Ring 23 weist dabei gewindefreie Durchgangsbohrungen auf, während bei dem anderen Ring 23' Bohrungen mit Innengewinde vorgesehen sind. Die Trennfuge 24 zwischen den beiden Ringen 23, 23' ist derart ausgestaltet, dass durch Befestigung des Außenrings 22 mit Bolzen 9 an einem Befestigungselement 8 die beiden Ringe 23, 23' so miteinander verspannt werden, dass eine Lagervorspannung erreicht wird, durch die axiale Relativbewegungen des Innenringes 21 gegenüber dem Außenring 22 verhindert werden kann. Gleichzeitig wird durch die Bolzen 9 das Getriebegehäuse 16 fest mit dem Befestigungselement 8 und dem zweireihigen Wälzlager 20 - nämlich dessen Außenring 22 - verbunden.

Der Planetenträger 14 ist weiterhin auf der von der Rotorwelle 2 abgewandten Seite des zweireihigen Wälzlagers 20 mit einem als Loslager ausgestalteten Stützlager 25 im Getriebegehäuse 16 gelagert. Da das zweireihige Wälzlager 22 mit dem Getriebegehäuse 16 verbunden ist und so ein Festlager gegenüber dem Getriebegehäuse 16 bildet, wird durch das Stützlager 25 eine Fest-Los-Lagerung des Planetenträgers 14 im Getriebegehäuse 16 erreicht.

Durch das Befestigungselement 8 wird das Planetengetriebe 10 und insbesondere dessen Getriebegehäuse 16 an Auflagern 31, die unmittelbar an der Tragstruktur 30 angeordnet sind, befestigt. Das Befestigungselement 8 weist weiterhin einen ringförmig ausgestalteten elastischen Ausgleichsbereich 18 auf, mit dem der Triebstrang 1 von der Tragstruktur 30 derart elastisch entkoppelt ist, dass die Übertragung von Vibrationen vom Planetengetriebe 10 auf die Tragstruktur 30 reduziert wird.

In einer Variante des Triebstrangs 1 gemäß Figur 1 handelt es sich bei dem Wälzlager 5 um ein Wälzlager, insbesondere ein Pendelrollenlager, welches axiale Kräfte aufnehmen kann, womit dieses Lager ein Festlager ist. Um Spannungen im Triebstrang 1 zu vermeiden ist in diesem Fall der Ausgleichsbereich 18 derart elastisch ausgestaltet, dass er eine ausreichende Bewegung des Planetengetriebes 10 in axialer Richtung der Rotorwelle 2 gestattet.

In einer alternativen Variante des Triebstrangs 1 gemäß Figur 1 ist das Wälzlager 5 als Loslager ausgestaltet, kann also keine Kräfte in axialer Richtung aufnehmen. In diesem Fall weist der elastische Ausgleichsbereich 18 in axialer Richtung eine solche Steifigkeit auf, dass axiale Relativbewegungen des Planetengetriebes 10 und damit des zweireihigen Wälzlagers 20 gegenüber der Tragstruktur 30 derart reduziert ist, dass das zweireihige Wälzlager 20 als Festlager gelten kann. Die Elastizität des Ausgleichsbereichs 18 in radialer Richtung kann dabei deutlich höher sein als in axialer Richtung, um die Übertragung von Vibrationen zu minimieren.

## Patentansprüche

1. Windenergieanlage mit einem Triebstrang (1) umfassend eine Rotorwelle (2) und ein Planetengetriebe (10) mit einer ersten Getriebestufe (11), wobei die Rotorwelle (2) mit dem Planetenträger (14) der ersten Getriebestufe (11) verbunden ist,
**dadurch gekennzeichnet, dass**
die Verbindung zwischen der Rotorwelle (2) und dem Planetenträger der ersten Getriebestufe (11) fest und spielfrei ist, die Rotorwelle (2) auf der von der ersten Getriebestufe (11) abgewandten Seite (3) mit einem Wälzlager (5) an einer Tragstruktur (30) gelagert ist und der mit der Rotorwelle (2) verbundene Planetenträger (14) mit einem zweireihigen Wälzlager (20) mit Schrägstellung in X-Anordnung als Festlager in einem Getriebegehäuse (16) gelagert ist, wobei das Getriebegehäuse (16) an wenigstens einem gegenüber der Tragstruktur (30) ortsfesten Auflager (31) befestigt ist.

2. Windenergieanlage nach Anspruch 1,
**dadurch gekennzeichnet, dass**
der Planetenträger (14) der ersten Getriebestufe (11) auf der von der Rotorwelle (2) abgewandten Seite des zweireihigen Wälzlagers (20) mit einem als Loslager ausgestalteten Stützlager (25) zur Bildung einer Fest-Los-Lagerung des Planetenträgers (14) im Getriebegehäuse (16) gelagert ist.

3. Windenergieanlage nach einem der vorhergehenden Ansprüche,
**dadurch gekennzeichnet, dass**
an der Rotorwelle (2) auf der von der ersten Getriebestufe (11) abgewandten Seite (3) angeordnete Wälzlager (5) als Festlager ausgebildet ist und die Befestigung des Getriebegehäuses (16) am Auflager (31) in axialer Richtung der Rotorwelle (2) Bewegungen zulassend ausgestaltet ist.

4. Windenergieanlage nach einem der vorhergehenden Ansprüche,
**dadurch gekennzeichnet, dass**
das Getriebegehäuse (16) gegenüber dem wenigstens einen Auflager (31) in axialer Richtung im Wesentlichen unbeweglich befestigt ist und das an der Rotorwelle (2) auf der von der ersten Getriebestufe (11) abgewandten Seite (3) angeordnete Wälzlager (5) als Loslager ausgebildet ist.

5. Windenergieanlage nach einem der vorhergehenden Ansprüche,
**dadurch gekennzeichnet, dass**
der Außenring (22) des zweireihigen Wälzlagers (20) geteilt ist.

6. Windenergieanlage nach Anspruch 5,
**dadurch gekennzeichnet, dass**
die Trennfuge (24) zwischen den beiden Teile (23, 23') des Außenrings (22) derart ausgestaltet ist, dass sich durch Verringerung der Fugenbreite oder eine entsprechende Verspannung der beiden Teile (23, 23') des Außenrings (22) eine Lagervorspannung erreichen lässt.

7. Windenergieanlage nach Anspruch 5 oder 6,
**dadurch gekennzeichnet, dass**
der eine Teil (23) des Außenrings (22) gewindefreie Durchgangsbohrungen und der andere Teil (23') des Außenrings (22) Bohrungen mit Innengewinde aufweist.

8. Windenergieanlage nach Anspruch 7,
**dadurch gekennzeichnet, dass**
die beiden Teile (23, 23') des Außenrings (22) durch die Befestigung des Außenrings (22) an einem Befestigungselement (8) zur Befestigung des Getriebegehäuses (11) an dem wenigstens einen Auflager (31) miteinander verspannt werden.

9. Windenergieanlage nach einem der vorhergehenden Ansprüche,
**dadurch gekennzeichnet, dass**
der Innenring (21) des zweireihigen Wellenlagers (20) durch die Befestigung der Rotorwelle (2) an der Getriebekomponente (12, 13, 14) der ersten Getriebestufe (11) fest eingespannt wird.

10. Windenergieanlage nach einem der vorhergehenden Ansprüche,
**dadurch gekennzeichnet, dass**
ein Befestigungselement (8) zur Befestigung des Getriebegehäuses (11) an dem wenigstens einen Auflager (31) vorgesehen ist, wobei das Befestigungselement (8) eine elastische Aufhängung (18) umfasst.

11. Windenergieanlage nach Anspruch 10,
**dadurch gekennzeichnet, dass**
die Elastizität der elastische Aufhängung (18) richtungsabhängig derart ausgestaltet ist, dass in einer Richtung parallel zur axialer Richtung der Rotorwelle (2) eine höhere Steifigkeit erreicht wird als in eine Richtung parallel zur radialen Richtung der Rotorwelle (2).

12. Windenergieanlage nach einem der vorhergehenden Ansprüche,
**dadurch gekennzeichnet, dass**
das zweireihige Wellenlager (20) ein zweireihiges Kegelrollenlager ist.

13. Windenergieanlage nach einem der vorhergehenden Ansprüche,
**dadurch gekennzeichnet, dass**
das Wälzlager (5) an der von der ersten Getriebestufe (11) abgewandten Seite (3) der Rotorwelle (2) und/oder das Stützlager (25) ein Zylinderrollenlager ist.

14. Windenergieanlage nach einem der vorhergehenden Ansprüche,
**dadurch gekennzeichnet, dass**
der Innendurchmesser des zweireihigen Wälzlagers (20) wenigstens 1.000 mm, weiter vorzugsweise wenigstens 1.100 mm, weiter vorzugsweise wenigstens 1.900 mm beträgt.
